Europäisches Patentamt

European Patent Office

Office européen des brevets

(19)

(11) Publication number: **0 473 910 A1**

# (12) EUROPEAN PATENT APPLICATION

(21) Application number: **91111790.1**

(22) Date of filing: **15.07.91**

(51) Int. Cl.⁵: **B65G 49/00**, B65G 61/00, B23Q 15/22

(30) Priority: **04.09.90 US 579111**

(43) Date of publication of application:
**11.03.92 Bulletin 92/11**

(84) Designated Contracting States:
**DE FR IT**

(71) Applicant: **CATERPILLAR INDUSTRIAL INC.**
5960 Heisley Road
Mentor Ohio 44060(US)

(72) Inventor: **Burkholder, Gary F.**
9880 Ridge Line Drive
North Royalton, Ohio 44133(US)
Inventor: **Valencic, Terence E.**
9605 Musket Drive
Mentor, Ohio 44060(US)

(74) Representative: **Wagner, Karl H.**
WAGNER & GEYER Patentanwälte
Gewuerzmuehlstrasse 5 Postfach 22 14 39
W-8000 München 22(DE)

(54) **Pallet positioning arrangement.**

(57) A locating apparatus (12) is provided for positioning a pallet carrying deck (22) relative to a pallet receiving device (16) so that a pallet (20) may be transferred between the pallet carrying deck (22) and the pallet receiving device (16). The locating apparatus (12) is mounted adjacent the pallet receiving device (16), spaced from the pallet receiving device (16), and free from connection to the pallet receiving device (16) so that the weight of the pallet carrying deck (22) and dynamic forces associated with pallet carrying deck (22) positioning are not applied to the pallet receiving device (16). An adjusting device (62) is provided to position one of first and second piloting devices (48,50) relative to the pallet receiving device (16) so that the pallet carrying deck (22) is aligned with the pallet receiving device (16) when the first and second piloting devices (48,50) are engaged. An anchoring device (90) anchors the locating apparatus (12) to an underlying surface (30) and provides elevational adjustment of the locating apparatus (12). The locating apparatus (12) is particularly suited for use in driverless automatic guided vehicle (14) applications.

Fig. 2

EP 0 473 910 A1

## Technical Field

This invention relates to a pallet positioning arrangement and more particularly to a free standing locating apparatus which is adjustable for positioning a pallet carrying deck relative to a pallet receiving device.

## Background Art

Material handling vehicles and particularly driverless automatic guided vehicles have been utilized for quite some time to deliver pallets between spaced locations in a machine shop, assembly area and storage facility. Typically, such vehicles are computer controlled and deliver load carrying pallets, for example, machine tool pallets, from a storage or assembly area to a pallet receiving device, such as a machine tool, where a work piece carried on the pallet is to be machined. In order to position a pallet carrying deck of the vehicle relative to a pallet receiving device of the machine tool, cone shaped pilot members have been provided directly on the machine tool, and conical seat members have been provided on the pallet carrying deck. An example of such an arrangement is disclosed in U.S. Patent 4,818,171 dated April 4, 1990 to Gary F. Burkholder. The pallet carrying deck is elevationally movable relative to the vehicle frame and the conical seat members are engageable with the cone shaped pilot members in response to lowering of the pallet carrying deck. The pallet carrying deck is moved transversely relative to the machine tool receiving portion in response to this engagement to a location at which the pallet carrying deck is aligned to transfer the pallet to the receiving portion of the machine tool. Due to the weight of the pallet, the weight of the pallet carrying deck, and the weight of the work piece, a considerable shock load is applied to the machine tool during engagement. This shock load tends to cause movement of the machine tool which ultimately results in a degradation of the accuracy and quality of machining. Such impact may also cause damage to the machine tool and reduce the life of the machine tool.

Further, the cone shaped members are directly connected to the machine tool by brackets. The brackets and cone shaped members are subjected to high cyclical load forces which eventually cause bending and breaking of the brackets, and premature wear of the cone shaped members. Bending or other movement of the bracket will result in improper alignment of the pallet carrying device relative to the pallet receiving device. Breakage of the bracket will prevent the pallet carrying deck from being positioned and supported on the cone shaped members. In either situation the alignment required for accurate pallet transfer will not be possible. To correct this problem replacement or repair of the brackets and cone shaped members is required. This involves a substantial amount of down time of the machine tool and may effect the progress of the entire manufacturing operation.

The cone shaped members and the brackets which connect the cone shaped members or their equivalents to the receiving device are rigidly affixed to the pallet receiving device and are not capable of adjustment. Because the cone shaped pilot members are not adjustable, particularly in directions parallel to the direction of load transfer, the accuracy of location of the cone shaped pilot members is less than required. Thus, the potential for full engagement between the conical seat members of the pallet carrying deck and the cone shaped members will be impossible. Because of this uneven engagement premature uneven wear of the cone shaped members and conical seat members will take place. As a result costly replacement of these members will be needed.

Since the cone shaped members are connected to and supported on the pallet receiving device the flexibility to use the cone shaped members in other applications is prohibited. Because the cone shaped members and the connecting brackets are designed for use with a particular pallet receiving device use in other applications is unlikely. Therefore, when the pallet receiving device becomes obsolete or is no longer required the cone shaped members and their brackets are unable to be used in other applications. It is beneficial that the cone shaped members and their associated connecting brackets are useable in other applications.

The present invention is directed to overcoming one or more of the problems as set forth above.

## Disclosure of the Invention

In one aspect of the present invention, a free standing locating apparatus for positioning a pallet carrying deck relative to a pallet receiving device is provided so that a pallet may be transferred between the pallet carrying deck and tee pallet receiving device. The locating apparatus includes an elevationally oriented base frame having upper and lower end portions, an anchor for connecting the lower end portion of the base frame to an underlying surface and maintaining the base frame at a location adjacent to and spaced from the pallet receiving device and a supporting member having first and second preselected spaced apart piloting devices. The supporting member is slidably supported on the base frame upper end portion and movable on the base frame upper end portion in a plane extending transverse to the elevationally oriented base frame. An adjusting apparatus is provided for selectively moving the supporting member in the plane to a preselected location relative to the pallet receiving device at which the first and second piloting devices are positioned to align the pallet carrying deck relative to the pallet receiving device, and a fastening device is provided for connecting the supporting member to the base frame upper end portion and for maintaining the supporting member at the preselected location.

In another aspect of the present invention a pallet positioning arrangement includes a material handling vehicle having a frame and a pallet carrying deck elevationally movably mounted on the frame and a receiving device for receiving a pallet transferred from the pallet carrying deck. A locating apparatus is positioned adjacent to but spaced from the receiving device and free from connection with the receiving device. First and second piloting devices which are cooperative to position one of the piloting devices relative to the other in response to engagement between the first and second piloting devices are provided. One of the piloting devices is mounted on the pallet carrying deck and elevationally movable with the pallet carrying deck and the other of the piloting devices is mounted on the locating apparatus. An adjusting device selectively positions the other of the first and second piloting devices relative to the receiving device so that the pallet carrying deck and the receiving device are aligned to transfer a load when the first and second piloting devices are engaged.

Since the locating apparatus is free from connection with the pallet receiving device the potential for shock loading caused by direct engagement between the pallet carrying deck and the receiving device is eliminated.

The adjusting device enables the piloting device to be accurately positioned relative to the pallet receiving device so that the pallet carrying deck may be accurately positioned relative to the pallet receiving device. The adjusting device enables out of adjustment conditions to be corrected in a simple and efficient manner.

Because the locating apparatus is separate from the pallet receiving device it is portable and suitable for use in an assortment of applications where different sizes and types of pallet receiving devices are used. The adjustability of the position of one of the piloting devices further enhances this flexibility.

Brief Description of the Drawings

Fig. 1 is a diagrammatic top elevational view of an embodiment of the present invention showing a free standing locating apparatus positioned between an automatic guided vehicle and a pallet receiving device;

Fig. 2 is a diagrammatic elevational view taken along lines 2-2 of Fig. 1;

Fig. 3 is a enlarged diagrammatic side elevational view of the free standing locating apparatus Fig. 2;

Fig. 4 is a diagrammatic top elevational view of the free standing locating apparatus of Fig. 3;

Fig. 5 is a diagrammatic end view of the free standing locating apparatus of Fig. 4;

Fig. 6 is a enlarged diagrammatic view of a portion of an adjusting device of the free standing locating apparatus shown in Fig. 4;

Fig. 7 is an enlarged diagrammatic view taken along lines 7-7 of Fig. 4 with portions broken away showing the adjusting and fastening devices in greater detail;

Fig. 8 is and enlarged diagrammatic cross section view taken along lines 8-8 of Fig. 4, with portions broken away, showing the adjusting and fastening devices in greater detail; and

Fig. 9 is a partial enlarged view taken along lines of 9-9 of Fig. 5, with portions of the free standing locating apparatus broken away showing details of an anchoring device.

Best Mode For Carrying Out the Invention

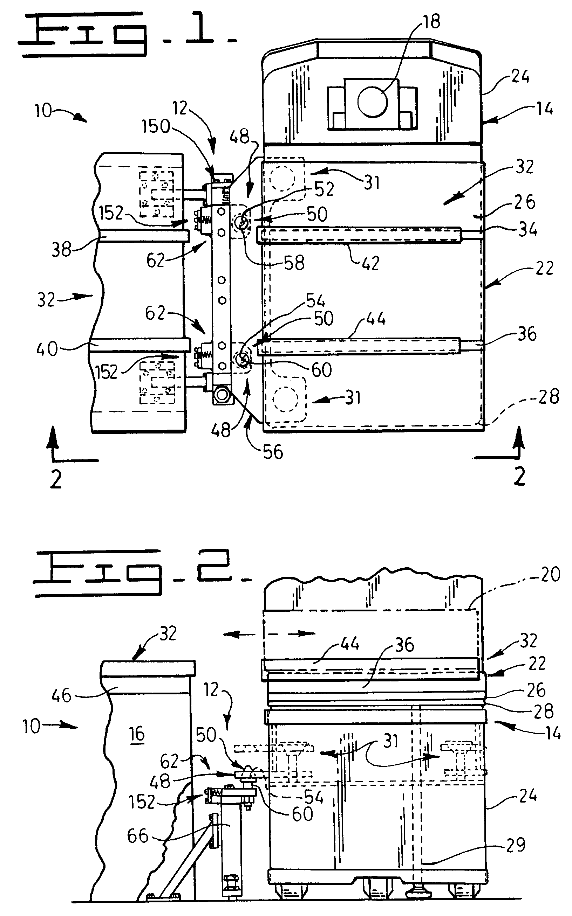

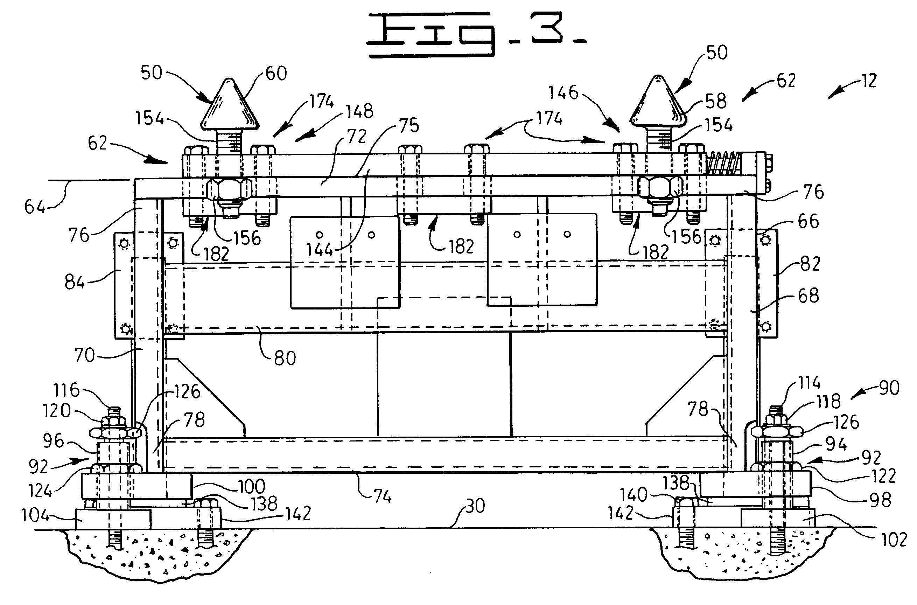

With reference to the drawings, and particularly Figs. 1 and 2, a pallet positioning arrangement 10 having a locating apparatus 12 positioned between a material handling vehicle 14, which is preferably an automatic guided vehicle, and a pallet receiving means 16 is shown. It is to be noted that any material handling vehicle capable of transferring a pallet is within the scope of the invention. The pallet receiving means 20 includes for example, machine tool tables, conveyors, storage racks, and the like. The automatic guided vehicle 14 is preferably, but not necessarily, a driverless free ranging vehicle with a laser scanner 18 mounted on one end portion of the vehicle 14. The vehicle 14 has an onboard computer (not shown) which receives information form the laser scanner 18 as well as on board sensors (not shown). The laser scanner reads bar coded targets located within the area of operation and the computer calculates the actual location of the vehicle 14. The on board sensors, which include steerable wheel angle and wheel rotation transducers, deliver information to the computer which is used by the computer to calculate the dead-reckoning position of the vehicle. The actual position of the vehicle and the dead-reckoning positions are compared and vehicle operation commands are issued by the computer to guide the vehicle along the proper path. Since such a navigation system is well known in the art no further discussion will be made.

The on board computer also issues load or pallet 20 manipulation commands whenever the vehicle has successfully traveled to and stopped at a designated docking location adjacent the pallet receiving means 20. Sensors on the vehicle 14 (not shown) are provided to signal the on board computer when the vehicle 14 is at a docked location. The onboard computer then stops the vehicle 14. Positioning of the automatic guided vehicle 14 relative to the receiving means 20 is not accurate enough in certain applications to permit pallet transfer without the aid of the locating apparatus 12.

The automatic guided vehicle 14 has a pallet carrying deck 22 which is supported on a frame 24 of the vehicle 14 and elevationally movable relative to the vehicle frame 24. Elevational movement of the pallet carrying deck 22 is achieved by virtue of a linear actuator (not shown) of any suitable well known construction. The linear actuator is connected to and between the frame 24 and load carrying deck 22 and responsive to the on board computer. The load carrying deck 22 has a floating surface portion 26 which is carried on a deck frame portion 28 by a plurality of bearings (not shown) of well known construction sandwiched between the floating surface portion 26 and the deck frame portion 28. The linear actuator is connected to the deck frame portion 28. A foot 29 connected to the deck frame portion 28 engages the underlying surface 30 when the deck 22 is lowered and is spaced from engaging the underlying surface when the deck 22 is raised so that the vehicle 14 may travel. The floating surface portion 26 of the deck is retained from floating relative to the vehicle frame 24 when the pallet carrying deck 22 is fully raised. The floating surface portion 26 is free to float on the deck frame portion 28 when lowered from the fully raised position. Retention and release of the floating surface portion is achieved in any suitable manner, such as by a conventional conical seat and cone arrangement 31.

The pallet receiving means 16 and the pallet carrying deck 22 includes means 32 for guiding movement of the pallet 20 in directions traverse the locating apparatus 12 and between the pallet receiving means 16 and the pallet carrying deck 22. The guiding means 32 preferably includes first and second spaced apart parallel deck guide rails 34,36 mounted on the pallet carrying deck 22 and first and second spaced apart parallel guide rails 38,40 mounted on the the pallet receiving means 16. The spacing between the first and second deck guide rails 34,36 and the first and second guide rails 38,40 are equal in magnitude. As best seen in Fig 1., the first and second deck guide rails 34,36 have first and second telescopic portions 42,44, respectively. The first and second telescopic portions 42,44 are parallel to each other and the first and second deck guide rails 34,36 and extend adjacent to the first and second guide rails 38,40 of the receiving means when the vehicle 14 is docked and accurately positioned. The telescopic portions 42,44 may be powered to move or caused to move by an external device (not shown).

The pallet receiving means 16 has a frame 46 to which the first and second guide rails 38,40 are attached. The frame 46 includes a table like structure which supports the first and second guide rails 38,40 horizontally and guides movement of the pallet to a machine tool, a storage location or the like.

The locating apparatus 12 is positioned adjacent to but spaced from the receiving means 16 and free from connection to the receiving means 16. First and second piloting means 48,50 are cooperative to position one of the piloting means 48,50 relative to the other in response to engagement between the first and second piloting means 48,50. One of the piloting means 48,50 is mounted on the pallet carrying deck and elevationally movable therewith and the other of the piloting means 48,50 is mounted on the locating apparatus 12. Specifically, the first piloting means 48 includes first and second spaced apart conical seat members 52,54. The conical seat members 52,54 are connected to the floating deck portion 26 in any suitable manner such as by welding.

As best seen in Figs. 1-3, the second piloting means 48 includes first and second spaced apart cone shaped members 58,60 which are connected to the locating apparatus 12. The first and second cone shaped members 58,60 are spaced a distance apart equal to the distance between the conical seats 52,54 and are adapted to be engaged by the conical seat members 52,54 and supported thereon in response to the deck 22 being lowered and supported thereon.

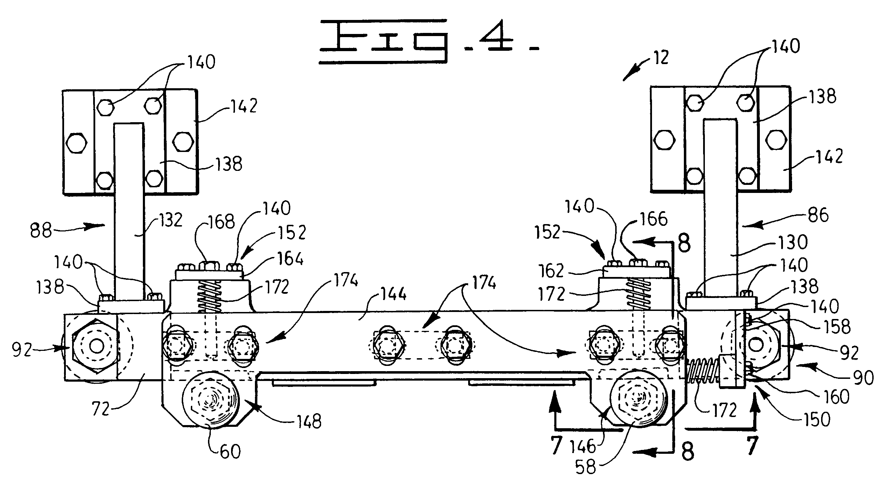

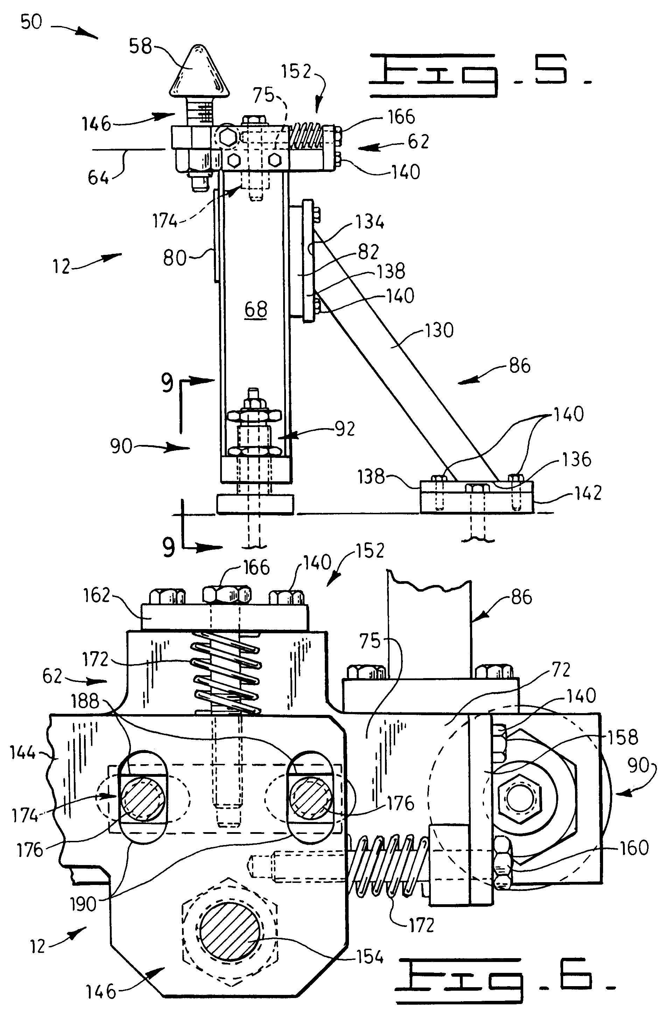

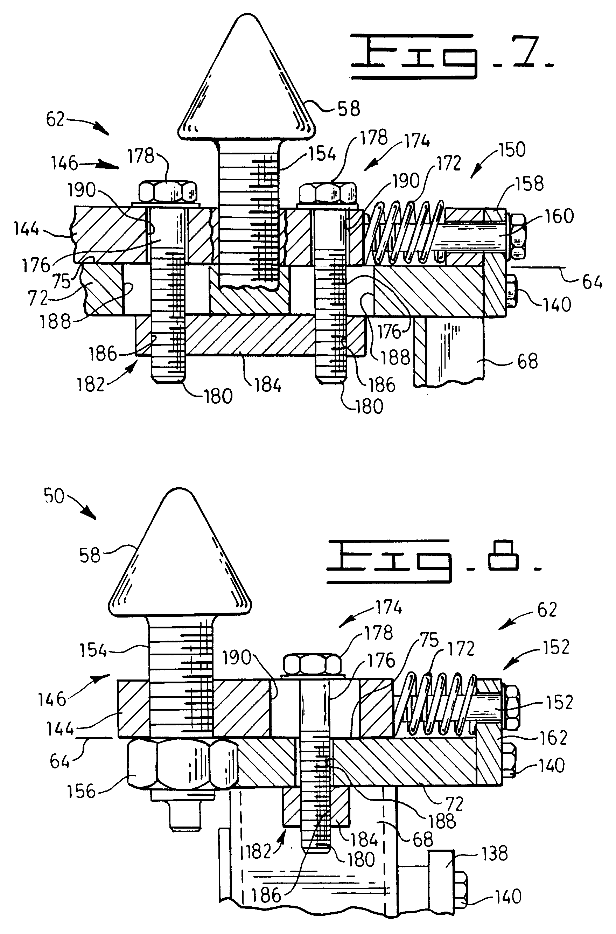

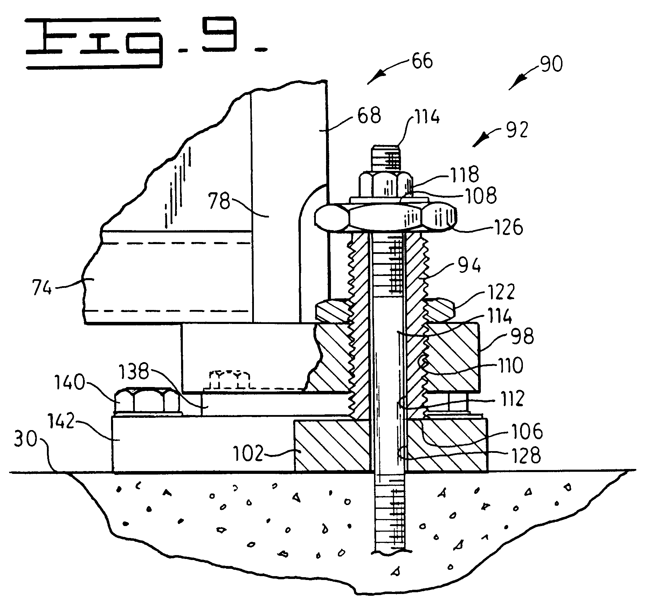

Referring to Figs 3,5,7,8 an adjusting means 62 is provided for selectively positioning the other of the first and second piloting means 48,50 relative to the receiving means 16 so that the pallet carrying deck 22 and receiving means 16 are aligned to transfer a load 20 when the first and second piloting means 48,50 are engaged. The adjusting means 62 is connected to the locating apparatus 12 and is adapted to move the other of the first and second piloting means 48,50 in a plane 64 passing through the locating apparatus 12 and extending in directions parallel to the direction of movement of the pallet 20. The adjusting means 62 provides that when the other of the first and second piloting means 48,50 are properly positioned in the plane 64 relative to the first and second guide rails 38,40 of the receiving means 16 and the first and second piloting means 48,50 are fully engaged, the first and second guide rails 34,36,38,40 of the receiving means 16 and the pallet carrying deck 22 will be aligned.

Referring to Fig. 3, the locating apparatus 12 has a base frame 66 defined by first and second elevationally oriented spaced apart side members 68,70, and upper and lower spaced apart beam members 72,74. The upper beam member 72 has an upper surface 75. The first and second side members 68,70 are connected to the upper and lower beam members 72,74 and describe the base frame 66 as having a rectangular shape. The upper and lower beam members 72,74 and a portion of the first and second side members 72,74 define upper and lower end portions 76,78 of the base frame 66. The base frame 66 has a center stiffener plate member 80 which is connected to the first and second side members 68,70 and a pair of spaced apart flanges 82,84 welded to the first and second legs 68,70 at a location along the legs adjacent the stiffener plate 80. The flanges 82,84 provide for attachment of first and second struts 86,88.

Referring to Figs 3 and 9, an anchor means 90 is provided for connecting the lower end portion 78 of the base frame 66 to the to an underlying surface 30 and for maintaining the the base frame 66 at the aforementioned location adjacent to and spaced from the pallet receiving device. The anchor means 90 includes a base frame adjusting means 92 for elevationally movably adjusting the upper end portion 76 of the base frame 66.

The base frame adjusting means 92 includes first and second sleeves 94,96 which are connected to the first and second side members 68,70 and longitudinally movable relative to the first and second side members 68,70. Preferably, the first and second sleeves 94,96 are screw threadably connected to the first and second side members 68,70 and longitudinally movable relative to the first and side members 68,70 in response to being rotated. The first and second side members 68,70 are elevationally movable in response to rotation of the first and second sleeves 94,96, respectively, which elevationally moves the upper end portion 76.

The base frame adjusting means 92 further includes first and second feet 98,100 and a threaded bore 110 (Fig. 3) in each of the feet 98,100. The first and second feet 98,100 are connected to the first and second side members 68,70, respectively, at the lower end portion 76 of base frame 66 in any suitable manner, such as by welding and the like. First and second pads 102,104 are supported at spaced apart locations on the underlying surface 30. The pads 102,104 support the first and second sleeves 94,96, on the underlying surface 30.

First and second threaded studs 114,116 are rigidly connected to the underlying surface 30 at spaced apart locations in any suitable manner, such as being imbedded in concrete of the underlying surface 30. The first and second studs 114,116 define the center of location for the first and second disk shaped pads 102,104 and the first and second sleeves 94,96. First and second members 118,120 are screw threadably connected to the first and second studs 114,116, respectively, and engageable with the first and second sleeves 94,96. First and second lock nuts 120,122 are screw threadably connected to the first and second sleeves 94,96, respectively, and engage the first and second feet 98,100 so that inadvertent rotation of the sleeves 94,96 is prevented.

Since the base frame adjusting means 92 has identical structures at each of the first and second side members 68,70, the following discussion will be directed to only the structure associated with the first side member 68, as shown in Fig. 9. Any discussion related to this structure will also relate to the structure associated with the second side member 70. The first sleeve 94 has first and second spaced apart ends 106, 108 and is screwthreadably disposed in the threaded bore 110 of the foot 98. The first end of the sleeve 94 is engageable with the first pad 102. An axial bore 112 disposed in the first sleeve 94, extends axially through the first sleeve 94, and opens at the first and second sleeve ends 106,108. The first pad 102 has a central opening 128 disposed therethrough. The first stud 114 is disposed in the axial bore 112 and central opening 128 and extends past the second end 108 of the sleeve 94.

Referring to Figs. 3 and 9, the first and second members 118,120 engage the second ends 108 of the first and second sleeves 94,96, respectively, and urges the first end 106 of the first and second sleeves 94,96 into engagement with the first and second pads 102,104, respectively. The first and second members 118,120 are torqued to a desired amount so that the sleeves 94,96 remain engaged with the pads 102,104 when external dynamic forces are placed upon the base frame 66 during pallet carrying deck 22 positioning.

The first and second sleeves 94,96 each have a flat portion 126 for example, a hex, a square or parallel spaced apart surfaces, at the second end 108 so that the sleeves 94,96 may be grasped by a wrench and rotated to a desired longitudinal location.

The first and second struts 86,88 include first and second beams 130,132. The first and second beams 130,132 each have first and second spaced ends 134,136 and a flange 138 connected at each of the ends 134,136. The flanges 138 facilitate connection of the first and second beams 130,132 to the first and second flanges 82,84 on the base frame 66 and to the underlying surface 30 by threaded fasteners 140. The struts 86,88 hold the base frame 66 in the upright position and from tipping movement during the dynamics of load carrying deck 22 engagement and subsequent load carrying deck 22 support. A support pad 142 may be provided on the underlying surface 30 for connection and alignment purposes. The support pad 142 may be connected in any suitable manner to the underlying surface 30 such as by threaded fasteners 140.

As shown in Figs. 4-8, the locating apparatus 12 has a supporting member 144 which is slidably supported on the base frame 66 upper end portion 76 and movable on the base frame upper end portion 76 in the plane 64. In particular the supporting member 144 is slidably supported on the upper surface 75 which lies in the plane 64. It is to be reiterated that the plane 64 extends in directions transverse to the elevational orientation of the base frame 66 and substantially parallel to the direction of pallet 20 transfer. The piloting devices 146,148 of the supporting member 144 may be either of the first or second piloting means 48,50.

In particular, the first and second piloting devices 146,148 disclosed include first and second cone shaped members 58,60. The cone shaped members 58,60 are connected to the supporting member 144 at the aforementioned preselected spaced locations and distances apart. The cone shaped members 58,60 each have a shank 154 which is screw threadably connected to the supporting member 144 at the aforementioned spaced locations and distances apart. The threaded shanks permit adjustment of the cone shaped members 58,60 in an elevational direction which is substantially normal to the supporting member 144 and plane 64. A jam nut 156 is connected to the shank 154 and locks the cone shaped members 58,60 at a desired elevational position.

The adjusting means 62, includes a first means 150 for moving the supporting member 144 on the plane 64 in a first direction and a second means 152 for moving the supporting member on the plane 64 in a second direction transverse the first direction. The first means 150 includes a first flange 158 connected to the base frame 66 at the upper end portion 76 and a first threaded fastener 160 screw threadably connected to the supporting member and rotatively connected to the first flange 158. The first threaded fastener 160 is adapted to move the supporting member 144 on said plane 64 in the first direction in response to rotation of the first threaded fastener 160.

The second means 152 includes second and third flanges 162,164 connected to the upper end portion 76 of the base frame 66 at spaced apart locations thereon. Second and third threaded fasteners 166,168 are screw threadably connected to the supporting member 144 at spaced apart locations on the supporting member 144 and rotatively connected to the second and third flanges 162,164, respectively. The second and third threaded fasteners 166,168 are adapted to move the supporting member on the plane 64 in the second direction in response to rotation of either of the second and third threaded fasteners 166,168. The first, second and third flanges 158,162,164 each have a bore disposed therein which supports and guides the first, second and third threaded fasteners 160,166,168 for free movement in rotary and longitudinal directions. The first flange 158 orients and substantially maintains the first threaded fastener 160 in the first direction and the second and third flanges 162,164 orients and substantially maintains the second and third threaded fasteners 166,168 in the second direction. It should be noted that the flanges 158,162,164 provide enough cocking of the threaded fasteners 160,166,168 to allow adequate angular movement of the supporting member 144. The first and second directions are transverse each other.

The first and second means 150,152 include biasing means 170 for urging the supporting means 144 away from the first, second, and third flanges 158,162,164. The biasing means 170 is disposed between the first, second and third flanges 158,162,164 and the supporting member 148. The biasing means 170 is preferably a coil spring 172 disposed about each of the first second and third threaded fasteners 160,166,168 and engaged with the flanges 158,162,164 and the supporting member 144. The first second and third flanges 158,162,164 are connected to the base frame 66 in any suitable manner such as by threaded fasteners 140.

Fastening means 174 is provided for connecting the supporting member 144 to the base frame 66 upper end portion 76 and maintaining the supporting member 144 at the preselected location (the adjusted to location of the first and second cone shaped members 58,60). At the preselected location of the supporting member 144, the pallet carrying deck 22 is aligned with the pallet receiving means 16 when the first and second conical seats 52,54 are fully engaged with the first and second cone shaped members 58,60. The fastening means 174 includes a plurality of elongated fasteners 176 each having a head portion 178 and a shank portion 180. The fastening means 174 also includes means 182 for screw threadably engaging the shank portion 180 and urging the head portion 178 into forceable engagement with the supporting member 144. Preferably the means 182 includes a plurality of plates 184 having spaced pairs of threaded bores 186 disposed therein for receiving pairs of elongated fasteners 176.

As best seen in Fig. 6 the adjusting means 62 preferably includes a plurality of first elongated slots 188 disposed at spaced locations in the upper beam member 72 of the the base frame 66 upper end portion 76. The plurality of first slots 188 are disposed in and extend through the base frame 66. The first elongated slots 188 are oriented parallel to each other in the direction of elongation and sequentially aligned along the upper beam member 72. The first elongated slots 188 are oriented, in the direction of slot elongation, in the first direction of movement of the supporting member 144 and in the direction of orientation of the first fastener 160.

The adjusting means 62 also includes a plurality of second elongated slots 190 disposed at spaced apart locations in the supporting member 144. The second elongated slots 190 extend through the supporting member 144. The second elongated slots 190 are parallel to each other, in a direction transverse the direction of elongation of the slots 190, and are sequentially spaced along the supporting member 144. The second elongated slots 190 are oriented relative to the first elongated slots 188 so that the direction of elongation of the second slots 190 is transverse the direction of elongation of the first slots 188. The second elongated slots 190 are oriented, in the direction of elongation, in the second direction of movement of the supporting member 144 and in the axial direction of elongation of the second and third threaded fasteners 166,168. The first elongated slots 188 are each aligned to open into a respective one of the second elongated slots 190 and define a plurality of pairs of aligned elongated slots. The elongated fasteners 176 are disposed in the pairs of aligned slots 188,190 and maintained therein by the engaging means 182.

Industrial Applicability

With reference to the drawings, the locating apparatus 12 and particularly the base frame 66 is positioned adjacent but spaced from the pallet receiving means 16. The base frame 66 is attached to the underlying surface by the anchor means 90. The anchor means 90 roughly positions the locating apparatus 12 within a preselected range of accuracy of the pallet receiving means 16 so that subsequent fine adjustment may be made by the adjusting means 62. Rotation of the first and second sleeves 94,96 of the base frame adjusting means 92 positions the upper beam member 74 so that upper surface 75 thereof is substantially level and parallel to the guide rails 38,40 of the receiving means 16. Thus, any unevenness or angularity in the underlying surface is compensated for by this adjustment. Upon satisfactory positioning of the upper surface 75 the first and second lock nuts 122,124 are rotated on the first and second sleeves 94,96 until they are jammed against the first and second feet 98,100. This retains the sleeves 94,96 from further rotation in the threaded bores 110. The first and second members 118,120 are then screw threadably attached to the first and second threaded studs 114,116 and jammed against the second ends of the respective sleeves 94,96. Due to the force applied by the first and second members 118,120 the first end 106 of the sleeves 94,96 is urged against the first and second pads 102,104 supported on the underlying surface 30.

The first and second struts 86 and 88 which are connected to the first and second flanges 82,84 by threaded fasteners 140 are then connected to the supporting pads 142 by threaded fasteners 140. This connection insures that the base frame 66 is maintained substantially vertically and prevents tipping, bending and the like during the dynamics of the pallet carrying deck 22 positioning and pallet transfer. It should be noted that since the base frame 66 is attached to the underlying surface 30 and free from connection to the pallet receiving means 16 any shock loads applied to the base frame 66 will not be transferred to the pallet receiving means 16.

Once the frame is securely attached to the underlying surface 30 fine adjustment of one of the first and second piloting means 48,50 is made. Specifically, the first and second cone shaped members 58,60 must be accurately positioned relative to the pallet receiving means 16 so that the pallet guiding means 32, which passes the pallet 20 between the pallet receiving means 16 and the pallet carrying deck, is accurately aligned when the first and second conical seat members 52,54 are engaged with the first and second cone shaped members 58,60 and the floating surface portion 26 is supported in a three point fashion by the locating apparatus 12 and the foot 29.

The adjusting means 62 enables the first and second cone shaped members 58,60 to be accurately positioned in the plane 64, defined by the upper surface 75, by simply rotating selective ones of the first, second, and third threaded fasteners 160,166,168 in the desired direction. Movement of the supporting member 144 in the plane 64 and in the first and second directions is a function of the rotation. It should be noted that when only one of the second and third threaded fasteners 166,168 are rotated cocking of the supporting member 144 in the plane 64 will occur. Since the first and second cone shaped members 58,60 are connected to the supporting member 144 positioning of the supporting member 144 controls the position of the first and second cone shaped members 58,60. The first and second elongated slots 188,190 and the fastening means 174 disposed in the slots guides movement of the supporting means 144 in the first and second directions. A fixture or gage (not shown) of any suitable design will determine when the cone shaped members 58,60 are in the desired position relative to the pallet receiving device 16.

Adjustment of the supporting member 144 is possible only when the elongated fasteners 176 are released from clamping the supporting member against the upper beam member 72. The springs 172 allow the supporting member 144 to move to the desired position and urges the supporting member 144 to the desired position in the plane 64. When the supporting member 144 is at the desired adjusted to location the elongated fasteners 176 are rotated to forceable urge and secure the supporting member 144 against the upper surface 75.

Because the first and second cone shaped members 58,60 are screwthreadably adjustably connected to the supporting member 144 precise elevational adjustment of the first and second cone shaped members 58,60 is possible.

The automatic self guided vehicle 14 when docked at the pallet receiving means 16 lowers the pallet carrying deck 22 until the first and second conical seat members 52,54 are engaged with, at rest on, and supported on the first and second cone shaped members 58,60, and the foot 29 is engaged with and supported on the underlying surface 30, or an equivalent surface. Engagement between the first and second conical seat members 52,54 and the first and second cone shaped members 58,60, as the pallet carrying deck 22 lowers, causes the floating surface portion 26 to align with the pallet receiving means 16. Thus, accurate alignment is achieved in an efficient and economical manner and the potential for damage to and undesirable movement of the pallet receiving means 16 eliminated.

Other aspects, objects and advantages of the present invention can be obtained from a study of the drawings, the disclosure and the appended claims.

**Claims**

1.  A free standing locating apparatus (12) for positioning a pallet carrying deck (22) relative to a pallet receiving means (16), comprising:

    an elevationally oriented base frame (66) having upper and lower end portions (76,78);

    anchor means (90) for connecting the lower end portion (78) of the base frame (66) to an underlying surface (30) and maintaining said base frame (66) at a location adjacent to and spaced from the pallet receiving means (16);

    a supporting member (144) having first and second preselected spaced apart piloting devices (146,148), said supporting member (144) being slidably supported on the base frame upper end portion (76) and movable on the base frame upper end portion (76) in a plane (64) extending transversely relative to the elevational orientation of the base frame (66);

    adjusting means (62) for selectively moving the supporting member (144) in said plane (64) to a preselected location relative to the pallet receiving means (16) at which said first and second piloting devices (146,148) are positioned to align the pallet carrying deck (22) relative to the pallet receiving means (16) so that a pallet (20) may be transferred therebetween; and

    fastening means (174) for connecting the supporting member (144) to the base frame upper end portion (76) and maintaining the supporting member (144) at said preselected location.

2.  A free standing locating apparatus (12), as set forth in claim 1, wherein said adjusting means (62) includes:

    first means (150) for moving said supporting member (144) on said plane (64) in a first direction; and

    second means (152) for moving the supporting member (144) on said plane (64) in a second direction transverse the first direction.

3.  A free standing locating apparatus (12), as set forth in claim 2, wherein said first and second means (150,152) each include means (170) for biasing the supporting member (144) to said preselected location adjacent the pallet receiving means (16).

4.  A free standing locating apparatus (12), as set forth in claim 2, wherein said fastening means (174) includes a plurality of elongated fasteners (176) and said adjusting means (62) includes:

    a plurality of first elongated slots (188) disposed at spaced locations in the base frame (66), said first elongated slots (188) being oriented parallel to each other and extend through the base frame (66), said first elongated slots (188) being oriented in the direction of elongation of the first slots (188) in the first direction of movement of the supporting member (144); and

    a plurality of second elongated slots (190) disposed at spaced apart locations in the supporting member (144), said second elongated slots (190) being parallel to each other and extend through the supporting member (144), said second elongated slots (190) being oriented relative to the first elongated slots (188) so that the direction of elongation of the second slots (190) is transverse the direction of elongation of the first elongated slots (188) and in the second direction of movement of the supporting member (144), said first elongated slots (188) each being aligned to open into a respective one of the second slots (190) and defining a plurality of pairs of aligned elongated slots (188,190), said elongated fasteners (176) being disposed in said pairs of aligned elongated slots (188,190).

5. A free standing locating apparatus (12), as set forth in claim 4, wherein said fastening means (174) includes means (184) for maintaining the elongated fasteners (176) in said pairs of aligned elongated slots (188,190).

6. A free standing locating apparatus (12), as set forth in claim 4, wherein said elongated fasteners (176) each include a head portion (178) and a shank portion (180) and said fastening means (182) includes engaging means (182) for screw threadably engaging the shank portion (180) and urging the head portion (178) into forceable engagement with the supporting member (144).

7. A free standing locating apparatus (12), as set forth in claim 6, wherein said engaging means (182) includes a plate (184) having a pair of spaced threaded bores, said shank portion (180) of a pair of said fasteners (176) being screw threadably disposed in said pair of spaced threaded bores (186).

8. A free standing locating apparatus (12), as set forth in claim 2, wherein said first means (150) includes:
a first flange (158) connected to the base frame (66);
a first threaded fastener (160) screw threadably connected to the supporting member (144) and rotatively connected to the first flange (158), said first threaded fastener (160) being adapted to move said supporting member (144) on said plane (64) in the first direction in response to rotation of the first threaded fastener (160).

9. A free standing locating apparatus (12), as set forth in claim 8, wherein said second means (152) includes:
a second flange (162) connected to the base frame (66);

a second threaded fastener (166) screw threadably connected to the supporting member (144) and rotatively connected to the second flange (162), said second threaded fastener (166) being adapted to move said supporting member (144) on said plane (64) in the second direction in response to rotation of the second threaded fastener (166).

10. A free standing locating apparatus (12), as set forth in claim 9, wherein said second means (152) includes:
a third flange (164) connected to the base frame (66) at a location spaced from said second flange (162);
a third threaded fastener (168) screw threadably connected to the supporting member (144) and rotatively connected to the third flange (164), said third threaded fastener (168) being adapted to move said supporting member on said plane (64) in the second direction in response to rotation of the third threaded fastener (168).

11. A free standing locating apparatus (12), as set forth in claim 9, wherein the first and second means (150,152) include biasing means (170) for urging the supporting member (144) in directions away from the first and second flanges (158,162), said biasing means (178) being disposed between the supporting member (144) and the first and second flanges (158,162).

12. A free standing locating apparatus (12), as set forth in claim 9, wherein said adjusting means (62) includes:
a plurality of first elongated slots (188) disposed at spaced locations in the base frame (66) and oriented in the first direction of movement of the supporting member (144); and
a plurality of second elongated slots (190) disposed at spaced locations in the base frame (66) and oriented in the second direction of movement of the supporting member (144).

13. A free standing locating apparatus, as set forth in claim 10, wherein said fastening means (174) includes a plurality of elongated fasteners (176) and said adjusting means (62) includes:
a plurality of first elongated slots (188) disposed at spaced locations in the base frame (66), said first elongated slots (188) being oriented parallel to each other and extend through the base frame (66), said direction of elongation of the first elongated slots (188) being in the first direction of movement of the supporting member (144); and

a plurality of second elongated (190) slots disposed at spaced apart locations in the supporting member (144), said second elongated slots (190) being parallel to each other and extend through the supporting member (144), said second elongated slots (190) being transversely oriented relative to the first elongated slots (188) in the direction of elongation of the first elongated slots (188) and oriented in the direction of elongation in said second direction of movement of the supporting member (144), said first elongated slots (188) each being aligned to open into a respective one of the second elongated slots (190) and defining a plurality of pairs of aligned elongated slots, said elongated fasteners (176) being disposed in said pairs of aligned elongated slots (188,190).

14. A free standing locating apparatus (12), as set forth in claim 1, wherein said base frame upper end portion (76) includes an upper beam member (72) having an upper surface (75) defining said plane (64) and said supporting member (144) being slidably movable on the upper surface (75).

15. A free standing locating apparatus (12), as set forth in claim 14, wherein said base frame (66) includes:

first and second spaced elevationally oriented side members (68,70); and

first and second struts (86,88) connected to the first and second side members (68,70), respectively, and extending in an angularly downward direction from the first and second side members (68,70), said first and second side members (68,70) being connected to the underlying surface (30) by the anchor means (90) and said first and second struts (86,88) being connected to the underlying surface (30) by threaded fasteners (140).

16. A free standing locating apparatus (12), as set forth in claim 1, wherein said anchor means (90) includes base frame adjusting means (92) for elevationally movably adjusting the upper end portion (76) of the base frame (66).

17. A free standing locating apparatus (12), as set forth in claim 16, wherein said base frame (66) includes first and second spaced elevationally oriented side members (68,70) and said base frame adjusting means (92) includes:

a first sleeve (94) screw threadably connected to the first side member (68); and

a second sleeve (96) screw threadably connected to the second side member (70), said first and second sleeves (94,96) being longitudinally movable relative to the first and second side members (68,70) in response to being rotated, and said first and second side members (68,70) being elevationally moveable in response to rotation of the first and second sleeves (94,96), respectively.

18. A free standing locating apparatus (12), as set forth in claim 17, wherein said base frame adjusting means (92) includes:

first and second feet (98,100) each having a threaded bore (110) and being connected to the first and second side members (68,70), respectively; and

first and second pads (102,104) engageable with an underlying surface (30), said first and second sleeves (94,96) each having first and second spaced apart ends (106,108) and being screw threadably disposed in the threaded bores (110) of the first and second feet (98,100), respectively, said first end (106) of the first and second sleeves (94,96) being engageable with the first and second pads (102,104), respectively.

19. A free standing locating apparatus (12), as set forth in claim 18, wherein said first and second sleeves (94,96) each have an axial bore (112) opening at said first and second ends (106,108) of the first and second sleeves (94,96) and wherein said base frame adjusting means (92) includes:

first and second threaded studs (114,116) rigidly connected at spaces apart locations to the underlying surface (30), said first and second threaded studs (114,116) being disposed in the axial bore (112) of the first and second sleeves (94,96), respectively, and extending past the second end (108) of the first and second sleeves (94,96), respectively; and

first and second members (118,120) screwthreadably connected to the first and second studs (114,116), respectively, an engageable with the second ends (108) of the first and second sleeves (94,96), respectively.

20. A free standing locating apparatus (12), as set forth in claim 17, wherein said first and second sleeves (94,96) each have first and second ends (106,108) and a flat portion (126) at the second end portion (106), said flat portion (126) being adapted to be grasped by a tool.

21. A free standing locating apparatus, (12) as set forth in claim 18, wherein said base frame adjusting means (92) includes first and second lock nuts (122,124) screw threadably connected to the first and second sleeves (94,96) and engageable with the first and second feet (98,100), respectively.

22. A free standing locating apparatus (12), as set forth in claim 1, wherein said first and second spaced piloting devices (146,148) each include a cone shaped member (58,60) having a shank portion (180), said shank portions (180) being screwthreadably connected to the supporting member (144), and said cone shaped members (58,60) being elevationally adjustably movable relative to the supporting member (144) in response to rotation of the shank portions (180).

23. A free standing locating apparatus (12), as set forth in claim 22, wherein said pallet carrying deck (22) includes a first and second spaced conical seat members (52,54), said first and second cone shaped members (58,60) being adapted to engage said first and second conical seat members (52,54) and position said load carrying deck (22) relative to the pallet receiving means (16).

24. A pallet positioning arrangement (10), comprising:

a material handling vehicle (14) having a frame (24) and a pallet carrying deck (22) elevationally movably mounted on the frame (24);

receiving means (16) for receiving a pallet (20) transferred from the pallet carrying deck (22);

a locating apparatus (12) positioned adjacent to but spaced from the receiving means (16), said locating apparatus (12) being free from connection with the receiving means (16);

first and second piloting means (48,50) cooperative to position one of the piloting means (48) relative to the other (50) in response to engagement between the first and second piloting means (48,50), one of said piloting means (48) being mounted on the pallet carrying deck (22) and elevationally movable therewith and the other of said piloting means (50) being mounted on the locating apparatus (12);

adjusting means (62) for selectively positioning the other of the first and second piloting means (48,50) relative to the receiving means (16) so that the pallet carrying deck (22) and receiving means are aligned to transfer a load therebetween when the first and second piloting means (48,50) are engaged.

25. A pallet positioning arrangement (10), as set forth in claim 24, including means (32) for guiding movement of the pallet (20) in directions transverse the locating apparatus (12) and between the receiving means (16) and the pallet carrying deck (22), said adjusting means (62) being connected to the locating apparatus (12) and adapted to move the other of the first and second piloting means (48,50) in a plane (64) passing through the locating apparatus (12) and extending in directions parallel to the guided movement of the pallet (20).

26. A pallet positioning arrangement (10), as set forth in claim 25 wherein said guiding means (32) includes first and second spaced guide rails (34,38,36,30) mounted on each of the receiving means (16) and load carrying deck (22), said other of the first and second piloting means (50) being adjustably positionable in said plane (64) to a location at which the first and second guide rails (34,36,38,40) of the receiving means (16) and pallet carrying deck (22) are aligned to pass the pallet (20) therebetween in response to engagement between the first and second piloting means (48,50).

27. A pallet positioning arrangement (10), as set forth in claim 25, wherein said pallet carrying deck (22) has a foot (29) elevationally movable with said pallet carrying deck (22), said foot (29) extending in a downward direction toward an underlying surface (30), said foot (29) and locating apparatus (12) supporting the pallet carrying deck (22) in response to the engagement between the first and second piloting means (48,50) and engagement between the foot (29) and the underlying surface (30).

28. A pallet positioning arrangement (10), as set forth in claim 25, where in said locating apparatus (12) includes a base frame (66) and the other (50) of the first and second piloting means (48,50) includes a supporting member (144) and pair of spaced apart cone shaped members (58,60) connected to said supporting member (144), said supporting member (144) being slidably connected to the base frame (66) and movable in said plane (64).

29. A pallet positioning arrangement (10), as set forth in claim 28, wherein said adjusting means (62) includes first and second flanges (158,162), first and second threaded fasteners (160,166) and springs (172), said first and second flanges (158,162) being mounted at spaced apart locations on the base frame (66), said first and second threaded fasteners (160,166) being screwthreadably connected at spaced apart locations to the supporting member (144) and slidably connected to the first and second flanges (158,162), one of said springs (172) being disposed adjacent each the first and second threaded fasteners (160,166) and between the first and second flanges (158,162) and the supporting member (144).

30. A pallet positioning arrangement (10), as set forth in claim 27, wherein said one of the piloting means (48) includes a pair of spaced apart seat members (52,54), said pair of seat members (52,54) and said pair of cone shaped members (58,60) being spaced equal distances apart.

31. A pallet positioning arrangement (10), as set forth in claim 25, wherein the adjusting means (62) includes means (154,156) for elevationally adjusting the elevational position of the other of the piloting means (50) relative to the plane (64).

32. A pallet positioning apparatus (10), as set forth in claim 25 wherein said locating apparatus (12) has a base frame (66) and a supporting member (144), said base frame (66) having a lower end portion (78), an upper end portion (76), and an upper surface (75) lying in said plane (64), said other of the first and second piloting means (50) being connected to the supporting member (144) and said supporting member (144) being slidably supported on the upper surface (75) of said base frame (66).

33. A pallet positioning apparatus (10), as set forth in claim 32, wherein said adjusting means (62) includes first and second means (150,152) for moving the supporting member (144) in said plane (64) in first and second different directions, respectively.

34. A pallet positioning apparatus (10), as set forth in claim 33 wherein said first and second means (150,152) each include a threaded fastening member (160,166) screw threadably connected to the supporting member (144) and a spring (172) disposed about each threaded fastening member (160,166) and urgingly engaged with the supporting member (144).

35. A pallet positioning apparatus (10), as set forth in claim 32, including fastening means (174) for connecting the supporting member (144) to the base frame upper end portion (76) and maintaining the supporting member (144) at the selected position.

36. A pallet positioning apparatus (10), as set forth in claim 35, wherein said adjusting means (62) includes a plurality of first and second elongated slots (188,190) disposed in the base frame (66) and supporting member (144), respectively, said first and second elongated slots (188,190) being oriented transverse each other in the direction of elongation and being aligned to receive the fastening means (174), said fastening means (174) being disposed in the aligned first and second slots (188,190).

37. A pallet positioning apparatus (10), as set forth in claim 32, including anchor means (90) for connecting the lower end portion (78) of the base frame (66) to an underlying surface (30) and maintaining the locating apparatus (12) at said location adjacent to but spaced from the pallet receiving means (16).

38. A pallet positioning apparatus (10), as set forth in claim 37, wherein said anchor means (90) includes a means (92) for adjusting the elevational position of the upper surface (75) of the base frame (66).

FIG.1.

FIG.2.

Fig.3.

EP 0 473 910 A1

Fig.4.

Fig.5.

Fig.6.

16

Fig.7.

Fig.8.

Fig.9.

# DOCUMENTS CONSIDERED TO BE RELEVANT

EP 91111790.1

| Category | Citation of document with indication, where appropriate, of relevant passages | Relevant to claim | CLASSIFICATION OF THE APPLICATION (Int. Cl.5) |
|---|---|---|---|
| A | DE - A - 3 151 316 (K K AUTOMATION KLAUS TH. KRÄMER GMBH & CO KG) * Abstract; Fig. 1,2,5 * | 1,2,3, 14-16 | B 65 G 49/00 B 65 G 61/00 B 23 Q 15/22 |
| A | DE - A - 3 437 127 (HÖRL) * Abstract; page 11; fig. 1,2,5ff * | 1-3, 14-16, 22,23, 24-27, 28,30, 31-33, 35,37, 38 | |
| A | DE - A - 3 128 461 (HOLSTEIN) * Abstract; fig. 1 * | 1,22, 23,28, 30 | |
| A | DD - A - 258 194 (FORSCHUNGSZENTRUM) ---- | | TECHNICAL FIELDS SEARCHED (Int. Cl.5) B 23 Q 3/00 B 23 Q 7/00 B 23 Q 15/00 B 65 G 37/00 B 65 G 49/00 B 65 G 61/00 |

The present search report has been drawn up for all claims

| Place of search | Date of completion of the search | Examiner |
|---|---|---|
| VIENNA | 29-11-1991 | BLASL |

EPO FORM 1503 03.82 (P0401)